# EUROPÄISCHE PATENTSCHRIFT

(11) **EP 2 420 621 B1**
(45) Veröffentlichungstag und Bekanntmachung des Hinweises auf die Patenterteilung: **08.10.2014**
(21) Anmeldenummer: 10008249.4
(22) Anmeldetag: 06.08.2010
(51) Int. Cl.: E01C 19/48

(54) **Strassenfertiger und Verfahren zum Betreiben eines Strassenfertigers**
Paver and method for operating a paver
Finisseuse de route et procédé de fonctionnement d'une finisseuse de route

(43) Veröffentlichungstag der Anmeldung: 22.02.2012
(73) Patentinhaber: Joseph Vögele AG, 67067 Ludwigshafen (DE)
(72) Erfinder: Noll, Tobias, 76835 Roschbasch (DE); Weiser, Ralf, 68526 Ladenburg (DE)
(74) Vertreter: Grünecker, Kinkeldey, Stockmair & Schwanhäusser

(56) Entgegenhaltungen:
- DE-U1- 20 316 481
- US-A- 4 838 755
- US-A1- 2004 011 154

## Beschreibung

Die Erfindung betrifft einen Straßenfertiger gemäß Oberbegriff des Patentanspruchs 1 sowie ein Verfahren gemäß Oberbegriff des Patentanspruchs 14.

Der Verbrennungsmotor, meist ein Dieselmotor, des Primärantriebsaggregats eines Straßenfertigers wird im Betrieb (Einbauarbeitsfahrt und Transportfahrt) permanent betrieben, um die jederzeitige Betriebsbereitschaft des Straßenfertigers und seiner Funktionskomponenten zu gewährleisten. Unabhängig davon, ob im Betrieb hydraulische oder elektrische Energie von den Funktionskomponenten benötigt wird, wird dennoch ständig Leistung abgenommen. Dadurch entstehen durch die Betriebsbereitschaft des Straßenfertigers bedingte, eigentlich überflüssige Schleppverluste und unerwünscht hohe mechanische Belastungen, die den Brennstoffverbrauch erhöhen, und somit auch die Umwelt belasten.

Bei einem aus DE 203 16 481 U bekannten Straßenfertiger ist dem Pumpenverteilergetriebe eine schaltbare Kupplung zugeordnet, die beispielsweise zum Kaltstart des Antriebsmotors ausgekuppelt wird, um die Schlepplast zu verringern, indem, ausgenommen der Fahrantrieb und die hydraulische Lenkung, weitere hydraulisch betriebene Funktionskomponenten abgetrennt werden. Wenn der Fahrzeugführer die Kupplung auch beim Einbaufahrbetrieb nach Bedarf und Belieben ein- und auskuppelt, beispielsweise weil bestimmte Funktionskomponenten vorübergehend nicht benötigt werden, wird die Kupplung überlastet, was die erforderliche Betriebsbereitschaft des Fertigers gefährdet.

Aus US 2004/0011154 A ist eine mehrachsige Fahrzeugsteuervorrichtung in Form eines Joysticks auch für Baumaschinen bekannt, bei der zum Initiieren einer Betätigung von Funktionskomponenten ein Zeitintervall berücksichtigt wird, das bei einer Betätigung der Steuervorrichtung abgewartet wird, so dass die Funktionskomponenten erst mit einer Verzögerung betätigbar sind und die Baumaschine nicht umgehend betriebsbereit ist.

Im Hinblick auf zunehmende Bestrebungen zur Umweltentlastung und zum Vermeiden einer Vergeudung nicht erneuerbarer Energieträger, und auch für gesteigerte Standzeiten gibt es bereits Bestrebungen, die Energiebilanz eines Straßenfertigers zu verbessern. Die europäische Patentanmeldung mit dem Aktenzeichen 09 006 978.2-2422 mit älterem Zeitrang schlägt vor, in der Leistungsübertragung zumindest eine wahlweise ein- und auskuppelbare Kupplung vorzusehen, um in Betriebssituationen des Straßenfertigers, in denen eine Funktionskomponente eigentlich keiner Leistung bedarf, zumindest eine Hydraulikpumpe und/oder den Generator über die Kupplung abzukuppeln, um Schleppverluste zu reduzieren, Brennstoff einzusparen, und die Umwelt zu entlasten. Damit verbunden sind aufgrund reduzierter mechanischer Belastungen längere Standzeiten zumindest einiger Ausstattungskomponenten des Straßenfertigers und auch eine erhebliche Verbesserung der Energiebilanz. Die zumindest eine Kupplung wird bedienergeführt oder von einem Steuersystem nach ermitteltem Bedarf ausgekuppelt oder eingekuppelt. Die Kupplung kann stromauf eines Pumpenverteilergetriebes, im Pumpenverteilergetriebe oder in einem Leistungsausgang des Pumpenverteilergetriebes angeordnet sein und wird beispielsweise hydraulisch geschaltet. Da die von der zumindest einen Kupplung zu übertragende Leistung in einer Maschine wie einem Straßenfertiger erheblich ist, führen häufige Schaltvorgänge aufgrund sich oftmals rasch ändernden Bedarfs zu kritischen Kupplungsbelastungssituationen, die die erforderliche Betriebsbereitschaft des Straßenfertigers gefährden können.

Der Erfindung liegt die Aufgabe zugrunde, einen Straßenfertiger und ein Verfahren zum Betreiben des Straßenfertigers dahingehend zu verbessern, dass die erforderliche Betriebsbereitschaft auf effizientere Weise sichergestellt wird.

Die gestellte Aufgabe wird mit den Merkmalen des Patentanspruchs 1 und den Merkmalen des Patentanspruchs 14 gelöst.

Im Straßenfertiger führen Bedienereingaben bzw. Bedienbefehle zu Funktionsbetätigungen an der Maschine. In dem vorliegenden Fall registriert die Straßenfertiger-Steuerung Bedienbefehle und entscheidet, ob die Benutzereingabe zu einer Funktionsgruppe gehört, die durch die Kupplung zu- und abgeschaltet werden kann. Um die gewünschte Funktionsbetätigung des Bedieners ohne Beeinträchtigung der Funktionalität auszuführen, müssen vorliegende Bedienbefehle zu einem Einkuppeln und somit zu einem Zuschalten der Antriebskomponente (typischerweise einer Hydraulikpumpe) führen. Sobald der Bedienbefehl für die entsprechende Funktionsgruppe aufgehoben wird, kann die Antriebskomponente abgeschaltet werden. Hierdurch resultieren durch Bedienbefehle notwendige Ein- und Auskuppelvorgänge, die jedoch durch die Kupplungssteuervorrichtung übersteuert werden können.

Im Straßenfertiger übernimmt die Kupplungssteuervorrichtung, zumindest in bestimmten Betriebssituationen, die Steuerung der Schaltvorgänge der zumindest einen Kupplung, wobei sie abhängig zumindest von der Bedienerführung und/oder einer ermittelten Kupplungsbelastungssituation automatisch eine die Bedienerführung übersteuernde Auskuppelverzögerung und/oder Kupplungsschaltanzahl-Begrenzung so einstellt, dass entweder bei Einbauarbeitsfahrt oder bei Transportfahrt die ständige Betriebsbereitschaft des Straßenfertigers sichergestellt ist, jedoch manche nur wegen Bedarfs zweckmäßige Kupplungsschaltvorgänge im Hinblick auf den Schutz der Kupplung unterdrückt werden. So lässt sich Betriebssituationen in einer rückschauenden oder gegenwartsbezogenen Betrachtungsweise effizienter Rechnung tragen. Im Wesentlichen wird die Kupplung von der Kupplungssteuervorrichtung länger oder/und öfter eingekuppelt belassen, als es für die jeweilige Betriebssituation des Straßenfertigers nötig wäre. Die Kupplungssteuervorrichtung kann dabei alle Kupplungsschaltvorgänge veranlassen, und manchmal direkte oder indirekte nur aufgrund der Betriebssituation auftretende Bedienbefehle übersteuern.

Verfahrensgemäß kuppelt die Kupplungssteuervorrichtung die Kupplung erst nach Ablauf der eingestellten Auskuppelverzögerung automatisch aus, falls dann kein gegenteiliger Bedienbefehl anliegt und/oder hält sie die Kupplung während der eingestellten Kupplungs-schaltanzahl-Begrenzung automatisch eingekuppelt, obwohl ein gegenteiliger Bedienbefehl anliegt. Es wird auf diese Weise zwar nur ein Kompromiss beispielsweise bei der Einsparung von Brennstoff erzielt, jedoch können flankierende Maßnahmen getroffen werden, um zumindest die Schleppverluste dann zu minimieren, wenn trotz eines Bedienbefehls die zumindest eine Kupplung nicht umgehend ausgekuppelt wird, oder über die Zeitdauer mehrerer durch Bedienbefehle angeordneter Ein- und Auskuppelvorgänge eingekuppelt gehalten wird. Auf diese Weise wird permanente Betriebsbereitschaft sichergestellt und wird diese nicht durch eine Kupplungsüberlastung gefährdet.

Bei einer zweckmäßigen Ausführungsform des Straßenfertigers stellt die Kupplungssteuervorrichtung die Auskuppelverzögerung und/oder Kupplungsschaltanzahl-Begrenzung in Abhängigkeit von der vorhergehenden und/oder zukünftigen und/oder gegenwärtigen Kupplungsbelastungssituation ein.

Um sowohl die Bedienerführung als auch die Belastungssituation ordnungsgemäß berücksichtigen zu können, weist bei einer bevorzugten Ausführungsform die Kupplungssteuervorrichtung eine Erfassungssektion und eine Auswertesektion für wenigstens eine der folgenden, die Kupplungsbelastungssituation und die Betriebssituation repräsentierende Größe auf: wenigstens einen Bedienbefehl, der das Ein- oder Auskuppeln zur Folge hat und/oder Änderungen des Betriebsverhaltens des Verbrennungsmotors aufgrund des Betriebes oder Nichtbetrieb es von wenigstens einer Funktionskomponente und/oder wenigstens einen Temperaturmesswert und/oder wenigstens eine Ansprechreaktion der wenigstens einen Hydraulikpumpe oder wenigstens eines magnetbetätigten Steuerventils auf einen Bedienbefehl.

Ferner kann es zweckmäßig sein, wenn die Kupplungssteuervorrichtung eine zeitbezogene Aufzeichnungssektion für Zeitpunkte und/oder Anzahlen von Kupplungsschaltvorgängen, insbesondere des ersten Einkuppelvorganges, innerhalb eines festgelegten Erfassungsintervalls aufweist. Wird innerhalb des Erfassungsintervalls bereits beispielsweise ein Einkupplungsvorgang registriert, darf innerhalb desselben Erfassungsintervalls kein weiterer Einkupplungsvorgang vorgenommen werden, sondern die Kupplungssteuervorrichtung hält die Kupplung eingekuppelt, bis der aufgezeichnete erste Einkupplungsvorgang das Erfassungsintervall verlässt, und dann kein Bedienbefehl zum Einkuppeln mehr anliegt. Das Erfassungsintervall kann variabel gestaltet werden. Es kann sowohl durch die Gesamtanzahl an Schaltvorgängen innerhalb eines vorher spezifizierten Intervalls als auch durch einen beschafften Messwert beeinflusst werden. Steigt beispielsweise die Anzahl der Schaltvorgänge innerhalb einer Stunde über einen vom Kupplungshersteller spezifizierten Wert, vergrößert die Kupplungssteuervorrichtung das Erfassungsintervall bzw. Abtastintervall und wird somit die Schalthäufigkeit der Kupplung reduziert. Alternativ oder additiv kann auch zu hohe Öltemperatur die Anzahl der Schaltvorgänge, z.B. durch Verlängern des Abtastintervalls, reduzieren. Hierfür können auch mehrere Eingangsgrößen bzw. erfasste Zustandsänderungen kombiniert werden. Umgekehrt kann das Erfassungsintervall auch wieder verkürzt werden.

Zweckmäßig wird die Auskuppelverzögerung entweder konstant oder variabel eingestellt. Auch die Kupplungsschaltanzahl-Begrenzung kann entweder konstant oder variabel eingestellt werden. Eine Variation kann linear, progressiv oder degressiv ausgeführt werden.

Bei einer zweckmäßigen Ausführungsform des Straßenfertigers weist die Leistungsübertragung wenigstens ein leistungsverzweigendes Pumpenverteilergetriebe auf, das zumindest die wenigstens eine Hydraulikpumpe und, vorzugsweise, den Generator antreibt. Die wenigstens eine Kupplung kann zwischen dem Primärantriebsaggregat und dem Pumpenverteilergetriebe oder im Pumpenverteilergetriebe oder an einem Ausgang des Pumpenverteilergetriebes angeordnet sein.

Bei einer zweckmäßigen Ausführungsform sind sogar mindestens zwei parallele Kupplungen vorgesehen, die durch die Kupplungssteuervorrichtung einzeln oder gemeinsam geschaltet werden. Dabei erfolgt die Steuerung der mindestens zwei Kupplungen analog zur Steuerung nur einer einzigen Kupplung, wobei jedoch der jeweilige, durch die Kupplungssteuervorrichtung veranlasste Ein- und Auskuppelschaltvorgang durch Bedienbefehle für unterschiedliche Funktionskomponenten oder Funktionskomponentengruppen zumindest ausgelöst wird. Beispielsweise ist wenigstens eine Kupplung für häufiger und in kurzen Intervallen betätigbare Funktionskomponenten, wie Hydraulikzylinder aufweisende Funktionskomponenten, vorgesehen, und wenigstens eine weitere Kupplung für in längeren Intervallen betätigbare Funktionskomponenten, wie Fahrantriebe, Materialförderaggregate, Materialverteilaggregate, Tamper-, Verdichtungs- und Vibrationsaggregate, Heizeinrichtungen, und dgl..

In einer zweckmäßigen Ausführungsform ist die wenigstens eine Hydraulikpumpe eine Verstellpumpe, deren Fördermenge an den variierenden Leistungsbedarf einer Funktionskomponente anpassbar ist. Die hydraulisch betätigbaren Funktionskomponenten können jeweils zumindest einen Hydromotor, vorzugsweise einen Verstellhydromotor oder wenigstens einen Hydrozylinder, aufweisen. Zumindest die Verstellpumpe und/oder der Verstellhydromotor ermöglichen es, dann Schleppverluste oder Pumpverluste durch internes Abregeln zu minimieren, wenn die zugeordnete Kupplung nach wie vor eingekuppelt gehalten wird, obwohl die Funktionskomponente keiner Leistung mehr bedarf.

Bei einer anderen Ausführungsform umfasst eine elektrisch betätigbare Funktionskomponente, die vom Generator versorgt wird, eine elektrische Heizeinrichtung und/oder ein Elektromotor. Auch hier kann der vom Generator generierte Schleppwiderstand dann durch eine elektronische Regelung minimiert werden, wenn trotz eingekuppelt gehaltener Kupplung die Funktionskomponente keiner Leistung bedarf.

Bei einer besonders zweckmäßigen Ausführungsform ist die Kupplung elektrisch, hydraulisch, mechanisch oder pneumatisch betätigt, und vorzugsweise als Lamellen- oder Scheibenkupplung ausgebildet, und repräsentiert der erfasste und der Kupplungssteuervorrichtung übermittelte Temperaturmesswert die Getriebeöltemperatur im Pumpenverteilergetriebe und/oder die Öltemperatur in einem Hydraulikkreis der Kupplung. Der Temperaturmesswert ist eine sehr aussagefähige Größe zur Beurteilung der Kupplungsbelastungssituation. Falls zweckmäßig, können Temperaturmesswerte an unterschiedlichen Stellen erfasst und gegebenenfalls gemittelt werden.

Bei einer weiteren, wichtigen Ausführungsform ist für zumindest eine hydraulisch betätigbare Funktionskomponente in deren Hydraulikkreis eine drucklose Umlaufschaltung vorgesehen, die bei nicht anliegendem Bedienbefehl für die entsprechende Funktionsgruppe aktivierbar ist. Auf diese Weise werden dann sowohl bei eingekuppelter als auch bei ausgekuppelter Kupplung unnötige Schleppverluste oder Pumpverluste minimiert.

Ausführungsformen des Erfindungsgegenstandes werden anhand der Zeichnungen erläutert. Es zeigen:
- Fig. 1: eine schematische Seitenansicht eines Straßenfertigers mit hydraulisch und/oder elektrisch betätigbaren Funktionskomponenten,
- Fig. 2: ein schematisches Getriebeschaubild zur Leistungsübertragung von einem Primärantriebsaggregat des Straßenfertigers zu wenigstens einer Hydraulikpumpe und/oder einem Generator, wobei in der Leistungsübertragung eine ein- und auskuppelbare Kupplung enthalten ist,
- Fig. 3: ein schematisches Getriebeschaubild einer anderen Ausführungsform der Leistungsübertragung mit mehreren Kupplungen,
- Fig. 4: ein Diagramm zu Kupplungsschaltvorgängen unter Einflussnahme einer automatischen Kupplungssteuervorrichtung des Straßenfertigers beispielsweise in Fig. 1, im vorliegenden Fall unter Anwendung einer Auskupplungsverzögerung, und
- Fig. 5 - 11: hier das gleiche Diagramm von Fig. 4 zu Kupplungsschaltvorgängen unter Einflussnahme der Kupplungssteuervorrichtung bei Anwendung einer Kupplungsschaltanzahl-Begrenzung zu unterschiedlichen Zeitpunkten in fortlaufen-der Reihenfolge

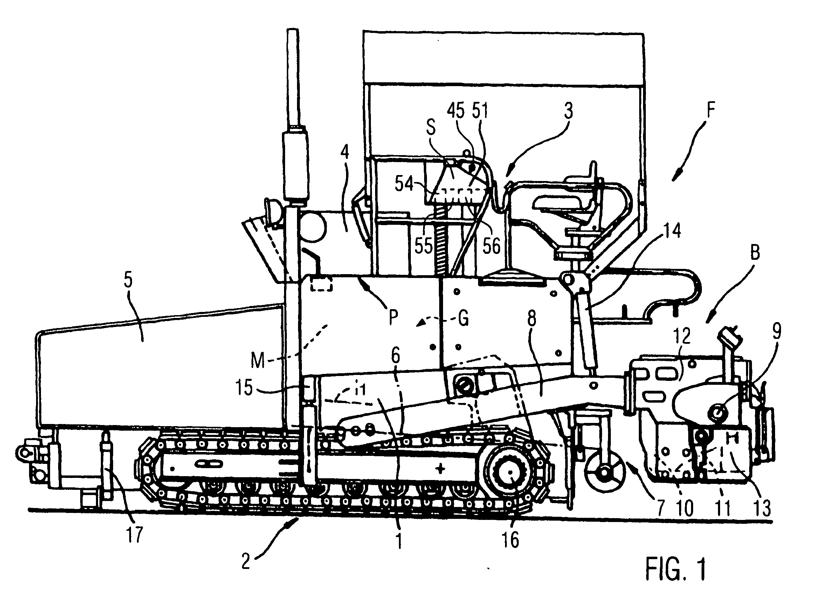

Ein selbstfahrender Straßenfertiger F in Fig. 1 zum Herstellen von Verkehrsflächen aus z.B. bituminösem, heißem Einbaumaterial oder Betoneinbaumaterial bei langsamer Einbauarbeitsfahrt, kann auch Transportfahrten mit wesentlich höherer Transportfahrgeschwindigkeit durchführen. Der Straßenfertiger F weist an einem Chassis 1 ein Fahrwerk 2, hier ein Raupenfahrwerk (alternativ ein Radfahrwerk, nicht gezeigt) auf, das durch wenigstens einen Hydromotor 16 angetrieben wird. Im vorderen Bereich des Chassis 1 ist ein Bunker 5 für Einbaumaterial angeordnet. Vom Bunker 5 erstreckt sich im Inneren des Chassis ein Längsförderaggregat 6 bis zu einem hinten angeordneten Materialverteilaggregat 7. Das Längsförderaggregat 6 kann beispielsweise durch nicht gezeigte Hydromotoren angetrieben werden, und kann gegebenenfalls eine elektrische Heizvorrichtung H umfassen. Das von wenigstens einem Hydromotor angetriebene und gegebenenfalls durch Hydrozylinder höhenverstellbare Materialverteilaggregat 7 befindet sich vor einer vom Straßenfertiger F an Holmen 8 geschleppten Einbaubohle B, die das Einbaumaterial ebnet und/oder verdichtet. Die Holme 8 sind am Chassis 1 angelenkt und mittels Hydrozylindern 15 höhenverstellbar. An den Holmen 8 sind ferner Hydrozylinder 14 angelenkt, die am Chassis 1 abgestützt sind und, z.B. bei Transportfahrt, die Einbaubohle B in der in Fig. 1 gezeigten, angehobenen Position halten, aber auch bei Einbauarbeitsfahrt in bestimmten Betriebsphasen betätigt werden können. Oben auf dem Chassis 1 befindet sich ein Führerstand 3 mit einer Steuer- und Bedienkonsole 51, beispielsweise einem Fahrhauptschalter 45, und einer Kupplungssteuervorrichtung S, vorzugsweise einer computerisierten Kupplungssteuervorrichtung S, der zumindest eine Erfassungssektion 54 und eine Auswertesektion 55, und optional auch eine zeitbezogene Aufzeichnungssektion 56, angehören. Ferner ist unter einer Abdeckung 4 ein Primärantriebsaggregat P mit einem Verbrennungsmotor M, typischerweise einem Dieselmotor, und einem Generator G zum Versorgen zumindest elektrischer Heizvorrichtungen H im Straßenfertiger F und/oder in der Einbaubohle B angeordnet und/oder zum Versorgen von Elektromotoren umfassenden Funktionskomponenten. Die Steuer- und Bedienkonsole 51 kommuniziert mit einer nicht gezeigten Straßenfertiger-Steuerung.

Die Einbaubohle B besitzt beispielsweise eine mit den Holmen 8 verbundene Grundbohle 12 und seitlich verfahrbare Ausziehbohlen 13, jeweils ausgestattet mit Tampern 11,10 und/oder Pressleisten (nicht gezeigt) und Vibrationseinrichtungen für bodenseitige Glättbleche, wobei die Tamper 10, 11, die Pressleisten und/oder die Glättbleche elektrische Heizeinrichtungen H aufweisen können. Die Ausziehbohlenteile 13 sind mittels Hydrozylindern 9 verschiebbar. Alternativ könnte die Einbaubohle B auch nur die Grundbohle 12 allein umfassen.

Die Hydromotoren, Hydrozylinder und die elektrischen Heizvorrichtungen und/oder Elektromotoren gehören zu im Betrieb des Straßenfertiges F abhängig von der jeweiligen Betriebssituation in unterschiedlichen Anzahlen oder zu unterschiedlichen Zeiten benötigten Funktionskomponenten und bilden zusammen mit dem Generator G und vom Primärantriebsaggregat P angetriebenen Hydraulikpumpen Funktionsbaugruppen des Straßenfertigers und/oder der Einbaubohle B, die Leistung vom Primärantriebsaggregat P beziehen. Weitere Funktionskomponenten sind beispielsweise Seitenwände des Bunkers 5, die über Hydrozylinder 17 verstellbar sind.

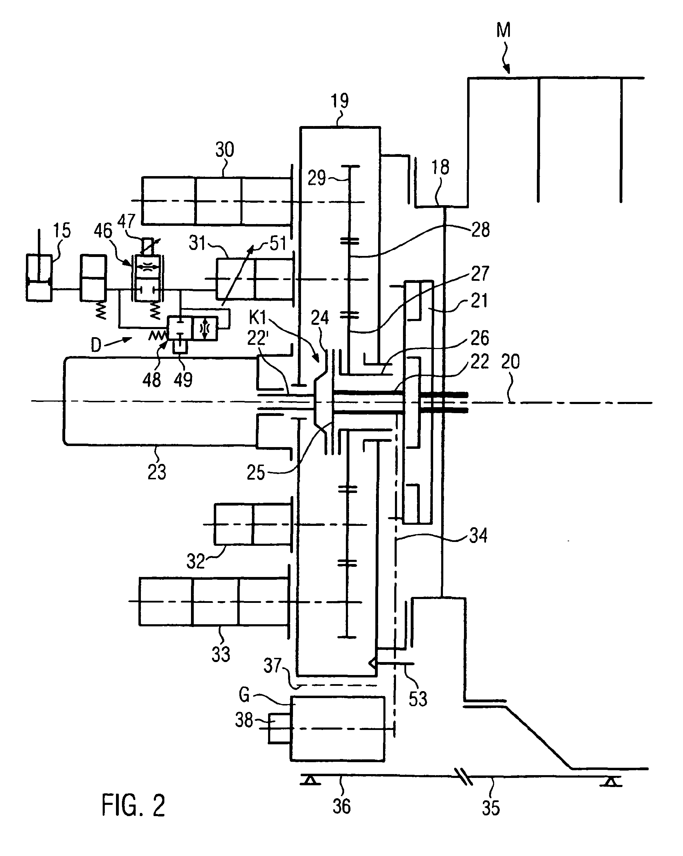

In Fig. 2 ist das Antriebsschema mehrere Funktionskomponenten angedeutet, wobei jedoch nur die jeweiligen Hydraulikpumpen und der Generator gezeigt werden, hingegen nicht die hydraulisch oder elektrisch betätigbaren Funktionskomponenten selbst, und auch kein Hydraulikölreservoir, Getriebeölreservoir oder dgl.. Der Verbrennungsmotor M in Fig. 2 weist ein Kupplungs- oder Schwungscheibengehäuse 18 auf, an das ein Pumpenverteilergetriebe 19 angeflanscht ist. Eine Kurbelwelle 20 des Verbrennungsmotors M treibt beispielsweise über eine drehelastische Kupplung 21 einen Abtriebsstrang 22, der zu einer Kupplung K1 am (oder wie gezeigt im) Pumpenverteilergetriebe 19 führt. Die Kupplung K1 ist hydraulisch, pneumatisch, elektrisch oder mechanisch zwischen einer eingekuppelten und einer ausgekuppelten Stellung schaltbar. In Fig. 2 ist die Kupplung K1 zwischen dem Abtriebsstrang 22 und einer koaxialen Verlängerung 22' des Abtriebsstranges 22 angeordnet. Die Verlängerung 22' führt zu einer in der gezeigten Ausführungsform am Pumpenverteilergetriebe 19 zentral angeflanschten Hydraulikpumpe 23 für Fahrantriebe, zu denen beispielsweise die Hydromotoren 16 gehören. Die Hydraulikpumpe 23 kann eine Konstantpumpe sein oder eine Verstellpumpe. Die Hydromotoren sind gegebenenfalls Verstellmotoren.

Die Kupplung K1 ist beispielsweise eine hydraulisch betätigbare Lamellenkupplung und besitzt wenigstens einen mit dem Abtriebsstrang 22 permanent verbundenen Kupplungsteil 25, der in der eingekuppelten Stellung der Kupplung K1 mit einem Kupplungsteil 24 zur Verlängerung 22' und gleichzeitig einer Hohlwelle 26 drehfest verbunden ist. Die Hohlwelle 26 treibt mehrere Getriebestufen 27, 28, 29 im Pumpenverteilergetriebe 19. Die Getriebestufen 27, 28, 29 können mehrere Hydraulikpumpen oder Hydraulikpumpenaggregate 30, 31, 32, 33 antreiben. Der Generator G ist entweder am Pumpenverteilergetriebe 19 gelagert (bei 37) oder mit einer eigenen Lagerung 36 im Chassis 1 oder an einer Motorlagerungskonsole 35 des Verbrennungsmotors M zusammen mit diesem, und wird in Fig. 2 über eine Antriebsverbindung 34 (z.B. einen Riementrieb oder eine Gelenkwelle) angetrieben.

Ist in Fig. 2 die Kupplung K1 eingekuppelt, so werden sämtliche Getriebestufen 27, 28, 29, die Hydraulikpumpe 23 und der Generator G von der Kurbelwelle 20 des Verbrennungsmotors angetrieben. Ist hingegen die Kupplung K1 ausgerückt, ist zumindest eine Hydraulikpumpe von dem Antriebsstrang 22 bzw. der Kurbelwelle 20 abgekuppelt, in Fig. 2 sogar die Pumpen 30 bis 33, und auch die Hydraulikpumpe 23, wie auch die Getriebestufen 27, 28, 29 des Pumpenverteilergetriebes 19 (keine Schlepplast für den Verbrennungsmotor erzeugenden Planschverluste oder Kämmverluste). Zum Einkuppeln oder Auskuppeln der Kupplung K1 kann ein Bediener beispielsweise am Fahrhauptschalter 45 Bedienbefehle generieren, die von der Kupplungssteuervorrichtung S registriert und aufgezeichnet werden. Letztendlich steuert dann die Kupplungssteuervorrichtung S das Ein- und Auskuppeln der Kupplung K1 in Abhängigkeit von zumindest einem Bedienbefehl und gegebenenfalls einem weiteren erfassten und ausgewerteten Parameter bzw. Messwert, z.B. der Temperatur des Getriebeöls im Pumpenverteilergetriebe 19 oder des Hydrauliköls in einem Hydraulikkreis der Kupplung K1.

In Fig. 2 ist als eine Option am permanent angetriebenen Generator G eine Pumpe 38 gezeigt, die ebenfalls permanent angetrieben wird und Grundfunktionen versorgt, z.B. die jeweils hydraulisch betätigbare Kupplung, z.B. die Kupplung K1 in Fig. 2.

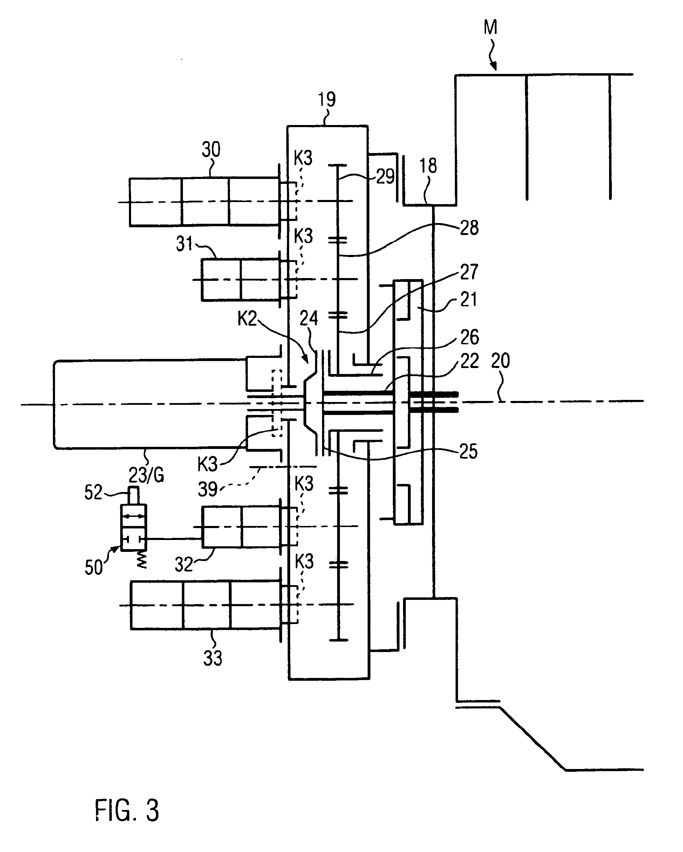

Fig. 3 verdeutlicht verschiedene Antriebsschemata. Der Antriebsstrang 22, der in Fig. 3 über die drehelastische Kupplung 21 mit der Kurbelwelle 20 des Verbrennungsmotors M verbunden ist, geht hier zur an das Pumpenverteilergetriebe 19 zentral angeflanschten Hydraulikpumpe 23 für die Fahrantriebe durch, so dass die Hydraulikpumpe 23 permanent angetrieben wird. Die Kupplung K2 sitzt auf dem durchgehenden Abtriebsstrang 22 und treibt in eingekuppeltem Zustand über die Hohlwelle 26 die Getriebestufen 27, 28, 29 des Pumpenverteilergetriebes 19 und somit die Pumpen 30 bis 33 an. Ist die Kupplung K2 ausgekuppelt, sind die Getriebestufen 27, 28, 29 und die Pumpen 30 bis 33 abgekuppelt, während die Hydraulikpumpe 23 weiterhin angetrieben wird. Der Generator G kann entweder wie in Fig. 2 permanent angetrieben werden, oder ist sogar kombiniert mit der Hydraulikpumpe 23 vom Antriebsstrang 22 angetrieben.

Bei einer alternativen Ausführungsform zu Fig. 3 ist anstelle der Hydraulikpumpe 23 der Generator G an das Pumpenverteilergetriebe 19 angeflanscht und permanent über den Antriebsstrang 22 mit der Kurbelwelle 20 verbunden. In diesem Fall wird beispielsweise die Hydraulikpumpe 23 an einen weiteren Leistungsausgang 39 des Pumpenverteilergetriebes 19 angeschlossen. In ausgekuppeltem Zustand der Kupplung K2 wird somit auch die Hydraulikpumpe 23 abgekoppelt, während der Generator G permanent angetrieben wird.

In Fig. 3 ist ferner eine weitere Alternative gestrichelt angedeutet, bei der jedem Hydraulikpumpenaggregat (mit mehreren Pumpenstufen) bzw. jeder Hydraulikpumpe 30 bis 33 und auch der Hydraulikpumpe 23 jeweils eine schaltbare Kupplung K3 zugeordnet ist, zweckmäßig am jeweiligen Ausgang des Pumpenverteilergetriebes 19. In diesem Fall kann die Kupplung K2 weggelassen werden und ist der Abtriebsstrang 22 permanent mit der Getriebestufe 27 im Pumpenverteilergetriebe 19 verbunden. Alternativ könnte jedoch auch dort eine Kupplung K3 vorgesehen sein.

Je nach Bedarf können über die einzelnen, einzeln, gruppenweise oder gemeinsam ein- und auskuppelbaren Kupplungen K1, K2, K3 alle, mehrere oder nur eine der Pumpen 30 bis 33, 23 abgekuppelt werden. Der Verbrennungsmotor M treibt dann nur den Abtriebsstrang 22 und gegebenenfalls die Getriebestufen 27, 28, 29 des Pumpenverteilergetriebes 19 und den Generator G permanent an. Bei einer weiteren, nicht gezeigten Alternative könnte auch der Generator G über eine Kupplung wahlweise abgekuppelt werden, beispielsweise beim Starten und/oder Warmlaufen des Verbrennungsmotors M.

Um die Energiebilanz des Verbrennungsmotors M zu verbessern, wird zum Anlassen und gegebenenfalls in der Warmlaufphase die Kupplung K1 in Fig. 2 in den ausgekuppelten Zustand geschaltet, so dass sämtliche Schlepplasten von der Kurbelwelle 20 bzw. dem Abtriebsstrang 22 abgekuppelt sind und der Verbrennungsmotor M leichter anspringt. Sobald der Straßenfertiger F die Einbauarbeitsfahrt oder die Transportfahrt aufnimmt, wird die Kupplung K1 eingekuppelt, so dass sämtliche Funktionskomponenten angetrieben werden. Auch der Generator G läuft gegebenenfalls permanent. In Leerlaufphasen, in denen keine Funktionen am Straßenfertiger aktiv sind, lässt sich durch Auskuppeln der Kupplung K1 Energie einsparen.

In der Ausführungsform in Fig. 3 wird beispielsweise die Kupplung K2 zum Anlassen und gegebenenfalls Warmlaufen des Verbrennungsmotors M ausgerückt, so dass die Hydraulikpumpen 30 bis 33 und gegebenenfalls die Hydraulikpumpe 23 abgekuppelt sind bzw. nur die Hydraulikpumpe 23 für die Fahrantriebe und der Generator G permanent angetrieben werden. Ist die Hydraulikpumpe 23 zentral an das Pumpenverteilergetriebe 19 angeflanscht, wie gezeigt, dann kann bei ausgekuppeltem Zustand der Kupplung K2 der Straßenfertiger F die Transportfahrt mit hoher Transportgeschwindigkeit und günstigerem Brennstoffverbrauch ausführen, da keine Schlepplasten der Funktionskomponenten überwunden zu werden brauchen. Hingegen kann der permanent angetriebene Generator G die Heizeinrichtungen H im Stillstand des Straßenfertigers F auf Betriebstemperatur aufheizen, ehe weitere Funktionskomponenten über die Kupplung K2 zugeschaltet werden. Falls die Hydraulikpumpe 23 für die Fahrantriebe permanent angetrieben wird, kann der Straßenfertiger F ohne überflüssige Schlepplasten weiterer Funktionskomponenten mit hoher Transportgeschwindigkeit und günstigem Brennstoffverbrauch fahren.

Sind hingegen, wie in Fig. 3 gestrichelt angedeutet, einzeln schaltbare Kupplungen K3 in den Ausgängen des Pumpenverteilergetriebes 19 zu den Pumpen 30 bis 33, 23 vorgesehen (die Kupplung K2 von Fig. 3 kann dann weggelassen sein), dann kann jede, können mehrere oder können alle Hydraulikpumpen nach Bedarf zugeschaltet oder abgekuppelt werden. Bei Transportfahrt des Straßenfertigers F wird beispielsweise nur die Kupplung K3 zur Hydraulikpumpe 23 für die Fahrantriebe eingerückt, während die weiteren Pumpen 30 bis 33 abgekuppelt bleiben. Der Generator G kann dann beispielsweise ebenfalls abgekuppelt sein oder mitlaufen. Zum Aufheizen der Heizeinrichtungen H kann der Generator entweder permanent oder über eine eingekuppelte Kupplung angetrieben werden, während die anderen Hydraulikpumpen 30 bis 33 weiterhin abgekuppelt bleiben. Die einzelnen, schaltbaren Kupplungen K3 in Fig. 3 ermöglichen es, jede Funktionskomponente nach Bedarf anzutreiben oder abzukuppeln, und führen zu einer Verbesserung der Energiebilanz des Straßenfertiers F bzw. Verbrennungsmotors M wahlweise beim Anlaufen und/oder Warmlaufen, während der Transportfahrt oder zum Aufheizen von Heizeinrichtungen H.

Die jeweilige Kupplung K1, K2, K3 kann, wahlweise, auch während Unterbrechungen der Einbauarbeitsfahrt des Straßenfertiges F, ausgekuppelt werden, z.B. während eine Lieferung frischen Einbaumaterials abgewartet wird. Die jeweilige Kupplung K1, K2, K3 kann zwar in bestimmten Betriebssituationen vom Fahrzeugführer durch Bedienbefehle im Führerstand 3 oder vom Begleitpersonal an einem Außensteuerstand an der Einbaubohle B eingekuppelt oder ausgekuppelt werden, wird jedoch zweckmäßig unter Auswertung zumindest der gegebenen Bedienbefehle vollautomatisch von der Kupplungssteuervorrichtung S des Straßenfertiges F geschaltet. Die Kupplungssteuervorrichtung S kooperiert dabei mit Überwachungs- und/oder Detektionseinrichtungen für Betriebssituationen, die das Abkuppeln oder Zuschalten bestimmter Schlepplasten erfordern. Die Kupplungssteuervorrichtung S steuert die jeweilige Kupplung K1, K2, K3 jedoch nicht nur nach Maßgabe von Bedienbefehlen oder Informationen der Überwachungs- und/oder Detektionseinrichtungen, sondern zusätzlich automatisch im Hinblick darauf, kritische Kupplungsbelastungssituationen zu vermeiden, wobei sie Bedienbefehle übersteuern kann und sich nach anderen Gesichtspunkten orientiert, die nachstehend erläutert werden.

Grundsätzlich steuert die Kupplungssteuervorrichtung S die jeweilige Kupplung K1, K2 oder K3 automatisch, ohne jedoch die Betriebsbereitschaft des Straßenfertigers bei Einbauarbeitsfahrt oder Transportfahrt zu gefährden. Bei der automatischen Kupplungssteuerung durch die Kupplungssteuervorrichtung werden sämtliche Bedienbefehle eines Bedieners erfasst. In der Auswertesektion 54 werden die Bedienbefehle ausgewertet. Das Ergebnis dieser Datenverarbeitung führt zum automatischen Aus- oder Einkuppeln. Liegt an der Kupplungssteuervorrichtung S beispielsweise ein Bedienbefehl zum Einkuppeln an, dann kuppelt die Kupplungssteuervorrichtung S die entsprechende Kupplung K1, K2 oder K3 ein. Wird der Bedienbefehl aufgehoben, beispielsweise durch Loslassen eines Tasters oder Überführen des Fahrhauptschalters 45 in die Nullstellung, dann kann die Kupplungssteuervorrichtung S die jeweilige Kupplung K1, K2 oder K3 auskuppeln, oder diesen Bedienbefehl gegebenenfalls übersteuern bzw. ignorieren. Die Kupplungssteuervorrichtung S kann gegebenenfalls eine erfasste sehr kritische Betriebssituation zum Anlass nehmen, die jeweilige Kupplung auszukuppeln oder ausgekuppelt zu halten, trotz entgegengesetzter Bedienbefehle, und einer Störungsmeldung generieren, um zu veranlassen, den Grund der sehr kritischen Betriebssituation zu beseitigen, z.B. eine Reparatur oder Wartung auszuführen.

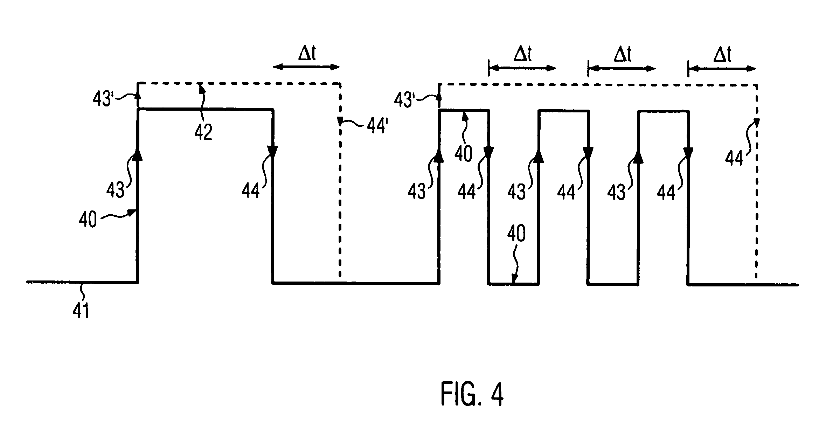

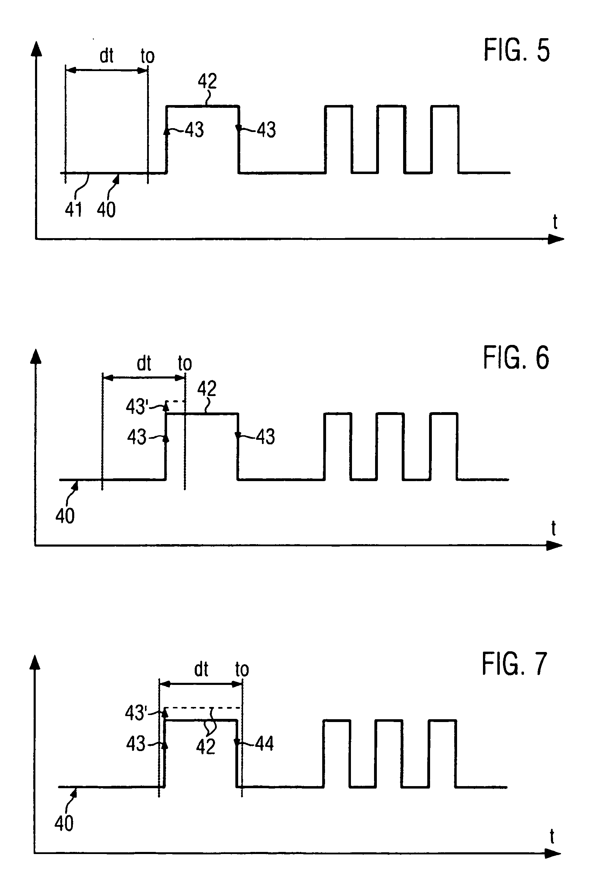

Bei einem anliegenden Bedienbefehl zum Einkuppeln muss der Einkuppelvorgang schnellstmöglich durchgeführt werden. Hingegen bieten sich für einen Auskuppelvorgang mehrere Strategien an. Vorzugsweise wird die Schalthäufigkeit aus Gründen der thermischen Belastung, z.B. durch zu häufige Kupplungsschaltvorgänge limitiert. Um die Schalthäufigkeit bei kurz aufeinanderfolgenden Bedienbefehlen zu senken, wird beispielsweise erst nach einem vorher festgelegten Zeitintervall einer Auskuppelverzögerung (Fig. 4, Δt) die Kupplung ausgekuppelt. Die Auskuppelverzögerung Δt kann eine festgelegte, gleichbleibende Zeitdauer sein. Zweckmäßig wird jedoch die Auskuppelverzögerung Δt sogar variabel gestaltet, in dem in der Auswertesektion 55 die Schalthäufigkeit und/oder wenigstens ein sonstiger Messwert, der sensorisch erfasst werden kann, berücksichtigt wird bzw. werden. Erkennt die Kupplungssteuervorrichtung S, z.B. zu große Schalthäufigkeit, vergrößert sie die Auskuppelverzögerung Δt. Wird über einen größeren Zeitraum geringe Schalthäufigkeit festgestellt, kann die Auskuppelverzögerung Δt wieder, z.B. schrittweise, verkürzt werden. Analog kann zum Variieren der Auskuppelverzögerung Δt ein Sensorsignal berücksichtigt werden, beispielsweise von einem Temperaturmessumformer, der die Getriebeöltemperatur im Pumpenverteilergetriebe 19 und/oder im Hydraulikkreis der Kupplung meldet. Bei steigender Temperatur wird dann durch eine Verlängerung der Auskuppelverzögerung Δt die Schalthäufigkeit reduziert, um einen weiteren Anstieg der Öltemperatur zu verhindern. Sinkt die Öltemperatur, kann die Auskuppelverzögerung Δt verkürzt werden. Ferner können zum Einstellen der angewandten Auskuppelverzögerung Δt mehrere Eingangsgrößen bzw. erfasste oder aufgezeichnete Zustandsänderungen miteinander kombiniert werden. Beschaffte Messwerte können mit der erfassten Schalthäufigkeit verknüpft werden. Die Auskuppelverzögerung Δt kann linear, degressiv oder progressiv variiert werden. Alternativ oder additiv kann die Kupplungssteuervorrichtung S innerhalb eines Erfassungs- bzw. Abtastintervalls die Anzahl der Schaltvorgänge begrenzen (Fig. 5-11). Hierfür werden beispielsweise Zeitpunkte von Einkuppelvorgängen aufgezeichnet. Ist z.B. innerhalb dieses Erfassungsintervalls bereits zumindest ein Einkuppelvorgang verzeichnet, wird jeder weitere Einkuppelvorgang unterdrückt, so dass die Kupplung eingekuppelt bleibt, bis der erste aufgezeichnete Einkuppelvorgang das Erfassungsintervall verlassen hat. Liegt nach dem Erfassungsintervall entweder kein Bedienbefehl oder bereits ein früher gegebener Bedienbefehl zum Auskuppeln an, kuppelt die Kupplungssteuervorrichtung S die Kupplung aus. Liegt, nachdem der aufgezeichnete Einkuppelvorgang das Erfassungsintvall verlassen hat, ein Bedienbefehl zum Einkuppeln an, wird die Kupplung erneut eingekuppelt.

Zweckmäßig wird die Größe des Erfassungs- bzw. Abtastintervalls automatisch von der Kupplungssteuervorrichtung S variiert. Die Größe kann variieren in Abhängigkeit von der Gesamtanzahl an Schaltvorgängen innerhalb eines vorher spezifizierten Intervalls und auch in Abhängigkeit von erfassten Messwerten. Steigt beispielsweise die Schalthäufigkeit innerhalb einer Stunde über einen vom Kupplungshersteller als kritisch spezifizierten Wert, vergrößert die Kupplungssteuervorrichtung S das Erfassungs- bzw. Abtastintervall, um die Schalthäufigkeit zu reduzieren. Alternativ oder additiv kann auch ein erfasster Temperaturwert berücksichtigt werden, so dass bei zu hoher Öltemperatur die Anzahl der Schaltvorgänge durch Intervallverlängerung reduziert wird. Auch hier können mehrere Eingangsgrößen kombiniert berücksichtigt werden, wie beispielsweise die Anzahl der aufgezeichneten Schaltvorgänge und diverse Messwerte, vorzugsweise Temperaturmesswerte.

Zusammengefasst kann die Kupplungssteuervorrichtung S eine konstante oder variable Auskuppelverzögerung Δt wie in Fig. 4 und/oder ein in seiner Zeitdauer festes oder variables Erfassungs- bzw. Abtastintervall zur Kupplungsschaltanzahl-Begrenzung dt in den Fig. 5 bis 11 einstellen. Das Erfassungsintervall ist z.B. aus dem Gegenwartszeitpunkt tₒ rückschauend und läuft zeitlich synchron mit dem Betriebsablauf mit.

Um die Schalthäufigkeit wenigstens einer Kupplung zu minimieren, ist es zweckmäßig, Funktionskomponenten weiterhin zugeschaltet zu lassen, die häufig und nur für sehr kurze Zeit in Betrieb sind. Eine Energieeinsparung kann dann bei diesen Funktionskomponenten beispielsweise durch einen drucklosen Umlauf D (in den Fig. 2 und 3 angedeutet) sichergestellt werden. Der drucklose Umlauf D wird zweckmäßig jeweils dann aktiviert, wenn die Kupplungssteuervorrichtung S auch die Kupplung auskuppelt. Der drucklose Umlauf D wird jeweils nur so lange aktiviert, bis der nächste Bedienbefehl zum Einkuppeln anliegt bzw. die jeweilige Kupplung von der Kupplungssteuervorrichtung S eingekuppelt wird. Zu solchen Funktionskomponenten gehören im Straßenfertiger beispielsweise solche, die mit Hydrozylindern 17, 15, 14, 9 betrieben werden.

Hingegen werden bei Einbauarbeitsfahrt Funktionskomponenten wie die Fahrantriebe, Materialförderaggregate, Materialverteilaggregate, Heizeinrichtungen, Tamper-, Pressleisten-und Vibrationsaggregate üblicherweise über lange Zeitintervalle betrieben. Die wenigstens eine diesen zugeordnete Kupplung wird durch die Kupplungssteuervorrichtung relativ unmittelbar nach Anliegen eines entsprechenden Bedienbefehls ausgekuppelt oder nur eingekuppelt gehalten, wenn dies die erfasste Kupplungsbelastungssituation erfordern sollte. Sofern mehr als eine Kupplung vorgesehen ist, kann die Kupplungssteuervorrichtung die mehreren Kupplungen analog zur Ansteuerung nur einer Kupplung ansteuern, wobei allerdings der jeweilige Ein- oder Auskuppelvorgang durch die Betätigung unterschiedlicher Funktionskomponenten oder die Bedienbefehle zur Betätigung unterschiedlicher Funktionskomponenten ausgelöst, jedoch dann entsprechend der momentan zweckmäßigen Steuerroutine veranlasst wird.

Als mögliche Option kann ein Bediener die jeweilige Kupplung auch manuell, beispielsweise durch einen Hebel, direkt einkuppeln. Die Kupplung könnte auch über einen separaten Schalter auf dem Bedienpult 51 im Handbetrieb betätigt werden.

Die von der Kupplungssteuervorrichtung S berücksichtigten Bedienbefehle können nicht nur direkt vom Bediener stammen, sondern alternativ oder additiv beispielsweise durch Auswerten des z.B. durch Funktionskomponenten beeinflussten Drehzahlverhaltens des Verbrennungsmotors M abgeleitet werden. Steigt die Drehzahl des Verbrennungsmotors M über eine vorgegebene Schwelle, wird von der Kupplungssteuervorrichtung S die Kupplung eingekuppelt. Sinkt hingegen die Drehzahl des Verbrennungsmotors unter eine vorgegebene Schwelle, wird die Kupplung von der Kupplungssteuervorrichtung ausgekuppelt. Alternativ ließe sich auch ein Schwenkwinkel einer Verstellpumpe, beispielsweise über die zur Schwenkwinkelverstellung verwendeten Magnetventil-Steuerströme zum Ableiten eines Bedienbefehls nutzen. Dies kann beispielsweise über den Steuerstrom eines Proportionalmagneten eines Proportionalventils ermittelt werden. Auch bei einem Schwarz/Weiß-Steuerventil ließe sich ein Bedienbefehl für einen Ein- oder Auskuppelvorgang anhand der Schaltstellung des Steuerventils, z.B. auch durch Messen der Stellströme, ableiten.

Fig. 2 verdeutlicht beispielsweise, dass die Hydraulikpumpe 31 eine Verstellpumpe ist (Verstellpfeil 57), und dass gegebenenfalls zumindest ein Proportionalmagnetsteuerventil 46 mit einem Proportionalmagneten 47 zum Betätigen beispielsweise des Hydraulikzylinders 15 eingesetzt wird. Hier ist ein druckloser Umlauf D mit einem beispielsweise als Druckwaage ausgebildeten Ventil 48 vorgesehen, das dann die Fördermenge der Hydraulikpumpe 31 zu einem Reservoir 49 drucklos abströmen lässt, wenn der Hydraulikzylinder 15 keiner Leistung bedarf bzw. das Proportionalmagnetventil 46 in seiner Absperrstellung ist. Ferner ist in Fig. 2 schematisch angedeutet, dass im Pumpenverteilergetriebe 19 mindestens ein Temperatursensor 53 angeordnet ist, der als Temperaturmessumformer die Getriebeöltemperatur an die Kupplungssteuervorrichtung S meldet. In Fig. 3 ist als Beispiel der Hydraulikpumpe 32 ein Schwarz/Weiß-Magnetventil 50 zur Betätigung der nicht gezeigten Funktionskomponente zugeordnet, dessen Schwarz/Weiß-Magnet 52 beispielsweise hinsichtlich des Schaltstromes überwacht wird, damit die Kupplungssteuervorrichtung S einen fiktiven Bedienbefehl zum Betätigen oder Abschalten der Funktionskomponente abzuleiten vermag. Alternativ könnte hierfür das jeweilige Ventil auch durch einen Wegaufnehmer hinsichtlich seiner Schaltstellung überwacht werden.

Im Diagramm in Fig. 4 repräsentiert ein als durchgezogene Linie gezeigter Kurvenzug 40 Kupplungsschaltvorgänge, die durch Bedienbefehle (43: Bedienbefehl einkuppeln; 44: Bedienbefehl auskuppeln) angeordnet und für den Betrieb des Straßenfertigers F eigentlich zweckmäßig wären. Die jeweilige Kupplung lässt sich zwischen einem ausgekuppelten Zustand 41 und einem eingekuppelten Zustand 42 umschalten. Ein tatsächlicher Einkuppelvorgang wird durch einen Richtungspfeil 43' angedeutet, während ein tatsächlicher Auskuppelvorgang durch einen Richtungspfeil 44' angedeutet wird, jeweils veranlasst durch die Kupplungssteuervorrichtung S (gestrichelte Linien). Sobald der Bedienbefehl 43 für den ersten Einkuppelvorgang generiert worden ist, setzt diesen die Kupplungssteuervorrichtung S schnellstmöglich um (Richtungspfeil 43'). Die Kupplung ist so lange im eingekuppelten Zustand 42, bis durch einen Bedienbefehl 44 der folgende Auskuppelvorgang angeordnet wird. Die Kupplungssteuervorrichtung S registriert zwar den Bedienbefehl 44, unterdrückt jedoch einen Schaltvorgang, indem sie ab dem Zeitpunkt des Auftretens Bedienbefehle 44 die Auskuppelverzögerung Δt einstellt, wenn die Auskuppelverzögerung Δt verstrichen ist, leitet die Kupplungssteuervorrichtung S den Auskuppelvorgang (Richtungspfeil 44') ein.

Der eine Schaltvorgang (43', 44') bis zum Ablauf der Auskuppelverzögerung Δt wird registriert. Zu einem späteren Zeitpunkt liegt erneut ein Bedienbefehl 43 für den nächsten Einkuppelvorgang an, den die Kupplungssteuervorrichtung S als Einkuppelvorgang (Richtungspfeil 43') unmittelbar umsetzt. Auf den nächsten Bedienbefehl 44 eines Auskuppelvorgangs reagiert die Kupplungssteuervorrichtung S zunächst mit der Einstellung der Auskuppelverzögerung Δt, d.h., es wird die Kupplung eingekuppelt gehalten. Da vor Ablauf der Einkuppelverzögerung Δt ein weiterer Bedienbefehl 43 einen Einkuppelvorgang anordnet, kuppelt die Kupplungssteuervorrichtung S die Kupplung nicht aus, sondern wartet sie den nächsten Bedienbefehl 44 für einen Auskuppelvorgang ab, um dann erneut die Auskuppelverzögerung Δt einzustellen. Das Gleiche passiert bei der nächstfolgenden, durch einen Bedienbefehl 43 angeordneten Einkuppelvorgang vor Ablauf der Auskuppelverzögerung Δt, so dass die Kupplung nicht ausgekuppelt wird, sondern die Kupplungssteuervorrichtung S bei Auftreten des zunächst letzten Bedienbefehls 44 für einen Auskuppelvorgang erneut die Auskuppelverzögerung Δt einstellt. Da dann kein weiterer Bedienbefehl 43 mehr anliegt, kuppelt die Kupplungssteuervorrichtung S schließlich die Kupplung mit dem Auskuppelvorgang (Richtungspfeil 44') nach Verstreichen der Auskuppelverzögerung Δt aus. In Fig. 4 wird jeweils die zeitlich gleiche Auskuppelverzögerung Δt eingestellt. Alternativ könnte die Zeitdauer der Auskuppelverzögerung Δt aber auch abhängig beispielsweise von der Kupplungsbelastungssituation verkürzt oder verlängert werden. Die Einflussnahme der Kupplungssteuervorrichtung S zum tatsächlichen Schalten der Kupplung ist unter Verwendung der Auskuppelverzögerung Δt in Fig. 4, hingegen unter Verwendung einer Kupplungsschaltanzahl-Begrenzung mit einem Abtastintervall dt in den Fig. 5 bis 11, jeweils durch gestrichelte Linien angedeutet, wie erwähnt.

In den Diagrammen in Fig. 5 bis Fig. 11 wendet die Kupplungssteuervorrichtung S alternativ zur Auskuppelverzögerung Δt gemäß Fig. 4 die Steuerstrategie einer eine Kupplungsschaltanzahl-Begrenzung unter Verwendung eines Abtastintervalls dt an, das sich vom gegenwärtigen Zeitpunkt tₒ mit einer festgelegten oder variablen (linear oder progressiv oder degressiv variablen) Zeitdauer in die Vergangenheit erstreckt. Die beiden Strategien könnten auch additiv oder abwechselnd angewendet werden.

Der ausgezogene Kurvenzug 40 deutet auch in Fig. 5 bis 11 die durch die Benutzereingabe bzw. Bedienung bzw. Bedienbefehle 43, 44 eigentlich benötigten Schaltzustände an, z.B. gleich wie in Fig. 4. Der Bedienbefehl 43 ist ein Signal zum Einkuppeln. Der Bedienbefehl 44 ist ein anliegendes Signal zum Auskuppeln. Die von der Bedienung benötigten Schaltzustände werden jedoch durch die Kupplungssteuervorrichtung S mit tatsächlichen Ein- und Auskuppelvorgängen (Richtungspfeile 43', 44') übersteuert. In den Abbildungen Fig. 5 bis 11 wird das Abtastintervall zu verschiedenen, fortlaufenden Gegenwartszeitpunkten (jeweils tₒ dargestellt.

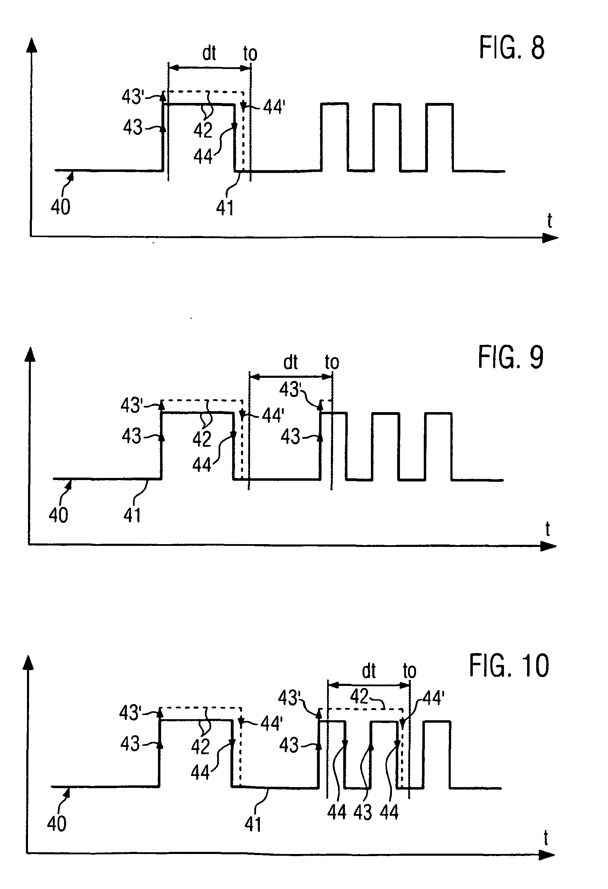

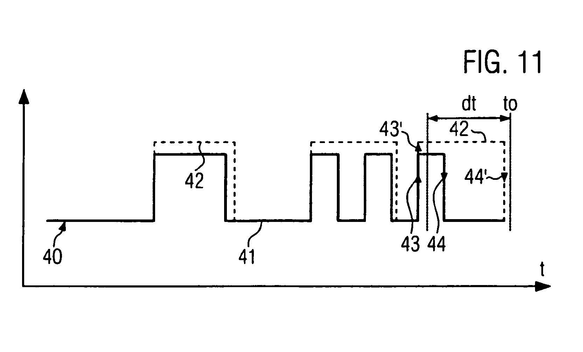

In Fig. 5 liegen in dem Erfassungsintervall dt noch keine benötigten Schaltvorgänge vor. Sämtliche angenommenen fiktiven Bedienbefehle 43, 44 liegen noch in der Zukunft. Erst in Fig. 6 liegt der Bedienbefehl 43 zum Einkuppeln im Erfassungsintervall dt vor. Dieser Bedienbefehl 43 wird von der Kupplungssteuervorrichtung S umgehend durch den Einkuppelvorgang (Richtungspfeil 43') umgesetzt (eingekuppelter Zustand 43). Der erste Einkuppelvorgang (Richtungspfeil 43') innerhalb des Erfassungsintervalls dt wird als Signal gespeichert. Liegt, sie in Fig. 7 dargestellt, der Bedienbefehl 44 als Signal zum Auskuppeln vor, wobei zeitlich das Erfassungsintervall dt mit der Zeit mitgewandert ist, liegt das gespeicherte Signal des Einkuppelvorgangs noch innerhalb des Erfassungs- bzw. Abtastintervalls dt, so dass die Kupplungssteuervorrichtung S den Bedienbefehl 44 übersteuert und die Kupplung eingekuppelt hält. Erst in Fig. 8 ist das Erfassungsinterfall dt mit der Zeit entsprechend weiter gewandert, so dass die Kupplungssteuervorrichtung S zeitgleich mit dem Austritt des gespeicherten Signals des Einkuppelvorgangs (Richtungspfeil 43') aus dem Erfassungsintervall dt den Auskuppelvorgang (Richtungspfeil 44') veranlasst (ausgekuppelter Zustand 41). Kommt, wie in Fig. 9 dargestellt, nach einer gewissen Zeit ein erneuter Bedienbefehl 43 zum Einkuppeln vor, löst die Kupplungssteuerung S den Einkuppelvorgang (Richtungspfeil 43') aus. Wandert das Abtastintervall dt mit der Zeit weiter (Fig. 10) und kommen in dieser Zeit neben dem dann wiederum gespeicherten Signal des vorhergehenden Einkuppelvorgangs 43' weitere Bedienbefehle 44 zum Auskuppeln bzw. ein weiterer Bedienbefehl 43 zum Einkuppeln, wobei das gespeicherte Signal des Einkuppelvorgangs noch in dem Erfassungsintervall dt liegt, so übersteuert die Kupplungssteuervorrichtung S sämtliche Bedienbefehle 44 zum Auskuppeln, und zwar bis zu dem Zeitpunkt bis zum Zeitpunkt t₀ das gespeicherte Signal des Einkuppelvorgangs 43' das Erfassungsintervall dt verlassen hat. Erst dann wird der Auskuppelvorgang 44' ausgelöst, wenn dann kein Bedienbefehl 43 mehr vorliegt. Kommt in Fig. 11 zu einem späteren Zeitpunkt erneut ein Bedienbefehl 43 und damit ein Signal zum Einkuppeln, wertet die Kupplungssteuerung S das Signal aus und löst es sofort den Einkuppelvorgang (Richtungspfeil 43') aus. Obwohl dann der Bedienbefehl 44 zum Auskuppeln innerhalb des Erfassungsintervalls dt anliegt, übersteuert die Kupplungssteuervorrichtung S das Signal, bis das gespeicherte Signal des vorherigen Einkuppelvorgangs (Richtungspfeil 43') das Erfassungsintervall dt verlassen hat. Erst dann erfolgt tatsächlich der Auskuppelvorgang (Richtungsteil 44').

Innerhalb des Kurvenzugs 40 wird die Kupplung nicht wie angeordnet viermal eingekuppelt und viermal ausgekuppelt, sondern beispielsweise nur dreimal, wobei die Betriebssicherheit des Straßenfertigers F zu keiner Zeit gefährdet wird.

## Patentansprüche

1. Straßenfertiger (F), mit einem einen Verbrennungsmotor (M) aufweisenden Primärantriebsaggregat (P) und einer Leistungsübertragung zu wenigstens einer Hydraulikpumpe (23, 30, 31, 32, 33) und/oder einem Generator (G) zur Leistungsversorgung von hydraulisch oder elektrisch betreibbaren Funktionskomponenten im Straßenfertiger (F) und/oder wenigstens einer Einbaubohle (B) des Straßenfertigers (F), wobei die Leistungsübertragung zumindest eine wahlweise ein- und auskuppelbare Kupplung (K1, K2, K3) aufweist, **dadurch gekennzeichnet, dass** zum Schalten der zumindest einen Kupplung eine Kupplungssteuervorrichtung (S) vorgesehen ist, mit der abhängig zumindest von einer mit Bedienbefehlen (43, 44) verbundenen Bedienerführung und/oder einer ermittelten Kupplungsbelastungssituation automatisch eine die Bedienerführung übersteuernde Auskuppelverzögerung (Δt) und/oder mittels eines zeitlich mitlaufenden Erfassungsintervalls (dt) eine Kupplungsschaltanzahl-Begrenzung (dt) einstellbar ist bzw. sind.

2. Straßenfertiger nach Anspruch 1, **dadurch gekennzeichnet, dass** mit der Kupplungssteuervorrichtung (S) die Auskuppelverzögerung (Δt) und/oder das Erfassungsintervall (dt) für die Kupplungsschaltanzahl-Begrenzung in Abhängigkeit von der gegenwärtigen und/oder vorhergehenden Bedienerführung und/oder Kupplungsbelastungssituation einstellbar ist.

3. Straßenfertiger nach Anspruch 1, **dadurch gekennzeichnet, dass** die Kupplungssteuervorrichtung (S) eine Erfassungssektion (54) und eine Auswertesektion (55) für wenigstens eine der folgenden, zumindest die Kupplungsbelastungssituation beeinflussende Zustandsänderungen aufweist: wenigstens einen Bedienbefehl (43, 44) zum Ein- oder Auskuppeln und/oder wenigstens eine Änderung des Betriebsverhaltens des Verbrennungsmotors (M) aufgrund der Inbetriebnahme oder Außerbetriebnahme wenigstens einer Funktionskomponente und/oder wenigstens einen Temperaturmesswert und/oder wenigstens eine Ansprechreaktion der wenigstens einen Hydraulikpumpe oder eines magnetbetätigten Steuerventils (48, 50).

4. Straßenfertiger nach Anspruch 3, **dadurch gekennzeichnet, dass** die Kupplungssteuervorrichtung (S) zusätzlich eine zeitbezogene Aufzeichnungssektion (56) für Zeitpunkte und/oder Anzahlen von zumindest Einkuppelvorgängen innerhalb des festgelegten Erfassungsintervalls (dt) aufweist.

5. Straßenfertiger nach Anspruch 1, **dadurch gekennzeichnet, dass** die Auskuppelverzögerung (Δt) entweder konstant oder variabel einstellbar ist.

6. Straßenfertiger nach Anspruch 1, **dadurch gekennzeichnet, dass** das Erfassungsintervall (dt) für die Kupplungsschaltanzahl-Begrenzung entweder konstant oder variabel einstellbar ist.

7. Straßenfertiger nach Anspruch 5 oder 6, **dadurch gekennzeichnet, dass** die Auskuppelverzögerung (Δt) und/oder das Erfassungsintervall (dt) für die Kupplungsschaltanzahl-Begrenzung linear oder progressiv oder degressiv variabel ist.

8. Straßenfertiger nach wenigstens einem der vorhergehenden Ansprüche, **dadurch gekennzeichnet, dass** die Leistungsübertragung wenigstens ein leistungsverzweigendes Pumpenverteilergetriebe (19) aufweist, das zumindest die wenigstens eine Hydraulikpumpe und, vorzugsweise, den Generator (G) antreibt, und dass die wenigstens eine Kupplung (K1, K2, K3) zwischen dem Primärantriebsaggregat (P) und dem Pumpenverteilergetriebe (19) oder im Pumpenverteilergetriebe (19) oder an einem Ausgang des Pumpenverteilergetriebes (19) angeordnet ist.

9. Straßenfertiger nach Anspruch 8, **dadurch gekennzeichnet, dass** mindestens zwei Kupplungen (K1, K2, K3) vorgesehen sind, vorzugsweise wenigstens eine Kupplung (K3) für häufiger und in kurzen Intervallen betätigbare Funktionskomponenten, wie Hydraulikzylinder (15, 17, 14, 9) aufweisende Funktionskomponenten, und wenigstens eine Kupplung (K1, K2) für in längeren Intervallen betätigbare Funktionskomponenten, wie Fahrantriebe, Materialförderaggregate, Materialverteilaggregate, Tamper-, Verdichtungs- und Vibrationsaggregate, Heizeinrichtungen.

10. Straßenfertiger nach Anspruch 1, **dadurch gekennzeichnet, dass** wenigstens eine Hydraulikpumpe (31) eine Verstellpumpe (57) ist, und dass die zugeordnete, hydraulisch betätigbare Funktionskomponente einen Hydromotor, vorzugsweise einen Verstellhydromotor oder wenigstens einen Hydrozylinder, aufweist.

11. Straßenfertiger nach Anspruch 1, **dadurch gekennzeichnet, dass** eine vom Generator (G) versorgte, elektrisch betätigbare Funktionskomponente eine elektrische Heizeinrichtung (H) und/oder einen Elektromotor aufweist.

12. Straßenfertiger nach Anspruch 1, **dadurch gekennzeichnet, dass** die Kupplung (K1, K2, K3), vorzugsweise eine Lamellen- oder Scheibenkupplung, hydraulisch oder pneumatisch oder elektrisch oder mechanisch schaltbar ist, und dass ein im Hinblick auf die Kupplungsbelastungssituation erfasster Temperaturmesswert die Getriebeöltemperatur in einem Pumpenverteilergetriebe (19) und/oder die Öltemperatur in einem Hydraulikkreis der Kupplung repräsentiert.

13. Straßenfertiger nach wenigstens einem der vorhergehenden Ansprüche, **dadurch gekennzeichnet, dass** für zumindest eine hydraulisch betätigbare Funktionskomponente in deren Hydraulikkreis eine wahlweise aktivierbare, vorzugsweise druckabhängig oder von der Kupplungssteuervorrichtung (S) aktivierbare, drucklose Umlaufschaltung (D) vorgesehen ist.

14. Verfahren zum Betreiben eines wenigstens eine Einbaubohle (B) aufweisenden Straßenfertigers (F) bei Einbauarbeitsfahrt und Transportfahrt, wobei der Straßenfertiger (F) ein einen Verbrennungsmotor (M) umfassendes Primärantriebsaggregat (P) sowie eine wenigstens eine wahlweise ein- und auskuppelbare Kupplung (K1, K2, K3) aufweisende Leistungsübertragung zu zumindest einer Hydraulikpumpe (30 bis 33, 23) und einen Generator (G) enthält, die bzw. der im Betrieb bei eingekuppelter Kupplung hydraulisch bzw. elektrisch betätigbare, für die Einbauarbeitsfahrt und/oder die Transportfahrt erforderliche Funktionskomponenten mit Leistung versorgt bzw. versorgen, **dadurch gekennzeichnet, dass** für die wenigstens eine Kupplung (K1, K2, K3) mittels einer Kupplungssteuervorrichtung (S) eine eine Bedienerführung übersteuernde Auskuppelverzögerung (Δt) und/oder eine Kupplungsschaltanzahl-Begrenzung abhängig zumindest von einem anliegenden Bedienbefehl (43, 44) zum Ein- oder Auskuppeln der Kupplung (K1, K2, K3) und/oder einer ermittelten Kupplungsbelastungssituation eingestellt wird, und dass die Kupplungssteuervorrichtung (S) die Kupplung (K1, K2, K3) erst nach Ablauf der Auskuppelverzögerung (Δt) automatisch auskuppelt, falls kein gegenteiliger Bedienbefehl (43) anliegt und/oder die Kupplung während eines zeitlich mitlaufenden Erfassungsintervalls (dt) für die Kupplungsschaltanzahl-Begrenzung trotz eines gegenteiligen Bedienbefehls (44) zum Auskuppeln automatisch eingekuppelt hält.

15. Verfahren nach Anspruch 14, **dadurch gekennzeichnet, dass** die Kupplungssteuervorrichtung (S) die Kupplung eingekuppelt hält, bis zumindest ein gespeichertes Signal eines tatsächlichen Einkuppelvorgangs (43') aus dem Erfassungsintervall (dt) ausgetreten ist.

## Claims

1. Road paver (F) comprising a primary power plant (P) with an internal combustion engine (M) and a power transfer train to at least one hydraulic pump (23, 30, 31, 32, 33) and/or a generator (G) for supplying power to hydraulically or electrically actuated functional components in the road paver (F), and/or in at least one screed (B) of the road paver (F), wherein the power transfer train comprises at least one selectively engageable and disengagable clutch (K1, K2, K3),
**characterized in that** for shifting the at least one clutch a clutch control device (S) is provided by means of which, depending on at least one operator guidance including operation commands (43, 44) and/or on a detected clutch load situation, a disengagement delay (Δt) and/or a clutch shifting number restriction (dt) comprising a detection interval (dt) moving along in time is automatically set for respectively overriding the operator guidance.

2. Road paver according to claim 1, **characterized in that** the clutch control device (S) is adapted to adjust the disengagement delay (Δt) and/or the detection interval (dt) of the clutch shifting number restriction depending on the current and/or the previous operator guidance and/or the clutch load situation.

3. Road paver according to claim 1, **characterized in that** the clutch control device (S) comprises a detection section (54) and an evaluation section (55) for at least one of the following changes of state at least influencing the clutch load situation: at least one operation command (43, 44) to engage or disengage the clutch, and/or at least one change of the operational behavior of the internal combustion engine (M) due to putting into operation or out of operation of at least one functional component, and/or at least one measured temperature value, and/or at least one response reaction of the at least one hydraulic pump or of a magnet-actuated control valve (48, 50).

4. Road paver according to claim 3, **characterized in that** the clutch control device (S) additionally comprises a time-related recording section (56) for points in time and/or numbers of at least clutch engaging operations within the set detection interval (dt).

5. Road paver according to claim 1, **characterized in that** the disengagement delay (Δt) can be adjusted either constantly or variably.

6. Road paver according to claim 1, **characterized in that** the detection delay (dt) of the clutch shifting number restriction can be adjusted either constantly or variably.

7. Road paver according to claim 5 **characterized in that** the disengagement delay (Δt) and/or the detection interval (dt) of the clutch shifting number restriction is linearly, progressively or decliningly variable.

8. Road paver according to at least one of the preceding claims, **characterized in that** the power transfer train comprises at least one power dividing pump transfer gear (19) which at least drives the at least one hydraulic pump and, preferably, the generator (G) and that at least one clutch (K1, K2, K3) is arranged between the primary power plant (P) and the pump transfer gear (19), or in the pump transfer gear (19), or at an output of the pump transfer gear (19).

9. Road paver according to claim 8, **characterized in that** at least two clutches (K!, K2, K3) are provided, preferably at least one clutch (K3) for functional components to be actuated quite frequently and at short intervals, such as functional components comprising hydraulic cylinders (15, 17, 14, 9) and at least one clutch (K1, K2) for functional components to be actuated at rather long intervals, such as travel drives, material transport units, material distribution units, tamper units, compaction units and vibration units, heating assemblies.

10. Road paver according to claim 1, **characterized in that** at least one hydraulic pump (31) is a variable displacement pump (57), and that the, hydraulically actuated functional component associated to the pump (57) comprises a hydraulic motor, preferably a variable displacement motor or at least a hydraulic cylinder.

11. Road paver according to claim 1, **characterized in that** an electrically actuated functional component supplied by the generator (G) comprises an electric heating assembly (H) and/or an electric motor.

12. Road paver according to claim 1, **characterized in that** the clutch (K1, K2, K3), preferably a multi-lamellae clutch or plate clutch, can be shifted hydraulically or pneumatically or electrically or mechanically, and that a measured temperature value detected in view to the clutch load situation represents the gear oil temperature in a hydraulic circuit of the clutch.

13. Road paver according to at least one of the preceding claims, **characterized in that** for at least one hydraulically actuated functional component in a hydraulic circuit a selectively actuable, preferably pressure depending or actuable by the clutch control device (S) relief circulation circuit (D) is provided.

14. Method of operating a road paver (F) in a working drive situation and a transport drive situation, the road paver comprising at least one screed (B), a primary power plant (P) with an internal combustion engine (M), and a power transfer train extending to at least one hydraulic pump (30 to 33, 23) and a generator (G), which in operation supplies hydraulically or electrically actuated functional components with power as required for the working drive situation, and/or the transport drive situation, the power transfer train containing at least one selectively engageable and disengageable clutch (K1, K2, K3) **characterized in that** for the at least one clutch (K1, K2, K3) provided in the power transfer train, a disengagement delay (Δt) and/or a clutch shifting number restriction is adjusted by a clutch control device (S) depending on at least one present operation command (43, 44) to engage or disengage the clutch (K1, K2, K3) and/or on a detected clutch load situation, the disengagement delay or the clutch shifting number restriction respectively overriding an operator guidance;
and that the clutch control device (S) automatically disengages the clutch (K1, K2, K3) only after the disengagement delay (Δt) has lapsed, if no operation command (43) to the contrary is present, and/or keeps the clutch automatically engaged during a detection interval (dt) of the clutch shifting number restriction despite a present disengagement operation command, the detection interval (dt) moving along in time.

15. Method according to claim 14, **characterized in that** the clutch control device (S) keeps the clutch engaged until at least one stored signal of an actual engagement operation command (43') exited the detection interval (dt).

## Revendications

1. Finisseur de route (F) comprenant un groupe d'entraînement primaire (P) présentant un moteur à combustion interne (M) et une transmission de puissance vers au moins une pompe hydraulique (23, 30, 31, 32, 33) et/ou un générateur (G) pour l'alimentation en puissance de composants fonctionnels à fonctionnement hydraulique ou électrique dans le finisseur de route (F), et/ou d'une table de finisseur (B) du finisseur de route (F), la transmission de puissance comprenant au moins un embrayage (K1, K2, K3) pouvant être embrayé et débrayé sélectivement, **caractérisé en ce que** pour commuter ledit au moins un embrayage, il est prévu un dispositif de commande d'embrayage (S) à l'aide duquel, en fonction d'au moins une conduite d'opérateur liée à des ordres de pilotage (43, 44) et/ou d'une situation de charge d'embrayage ayant été déterminée, peut ou peuvent être réglés automatiquement un retard de débrayage (Δt) prenant le pas sur la conduite d'opérateur, et/ou une limitation du nombre de commutations d'embrayage (dt) au moyen d'un intervalle de relevé (dt) glissant dans le temps.

2. Finisseur de route selon la revendication 1, **caractérisé en ce qu'**à l'aide du dispositif de commande d'embrayage (S), il est possible de régler le retard de débrayage (Δt) et/ou l'intervalle de relevé (dt) pour la limitation du nombre de commutations d'embrayage, en fonction de la conduite d'opérateur et/ou de la situation de charge d'embrayage présentes et/ou précédentes.

3. Finisseur de route selon la revendication 1, **caractérisé en ce que** le dispositif de commande d'embrayage (S) comprend une section de relevé (54) et une section de traitement (55) pour au moins une des variations d'état suivantes influençant au moins la situation de charge d'embrayage : au moins un ordre de pilotage (43, 44) pour embrayer ou débrayer, et/ou au moins une variation du comportement de fonctionnement du moteur à combustion interne (M) en raison de la mise en service ou hors service d'au moins un composant fonctionnel, et/ou au moins une valeur de mesure de température, et/ou au moins une réaction de réponse de ladite au moins une pompe hydraulique ou d'une vanne de commande (48, 50) à actionnement magnétique.

4. Finisseur de route selon la revendication 3, **caractérisé en ce que** le dispositif de commande d'embrayage (S) présente en supplément, une section d'enregistrement (56) par rapport au temps, pour des instants et/ou des nombres d'opérations d'embrayage au moins à l'intérieur de l'intervalle de relevé (dt) fixé.

5. Finisseur de route selon la revendication 1, **caractérisé en ce que** le retard de débrayage (Δt) peut être réglé de manière à être constant ou variable.

6. Finisseur de route selon la revendication 1, **caractérisé en ce que** l'intervalle de relevé (dt) peut être réglé de manière à être constant ou variable.

7. Finisseur de route selon la revendication 5 ou la revendication 6, **caractérisé en ce que** le retard de débrayage (Δt) et/ou l'intervalle de relevé (dt) pour la limitation du nombre de commutations de l'embrayage est variable de manière linéaire ou progressive ou dégressive.

8. Finisseur de route selon l'une au moins des revendications précédentes, **caractérisé en ce que** la transmission de puissance comprend au moins une boite de transfert de pompe (19) de répartition de la puissance, qui entraîne au moins ladite au moins une pompe hydraulique et, de préférence, le générateur (G), et **en ce que** ledit au moins un embrayage (K1, K2, K3) est agencé entre le groupe d'entraînement primaire (P) et la boite de transfert de pompe (19) ou dans la boite de transfert de pompe (19) ou à une sortie de la boite de transfert de pompe (19).

9. Finisseur de route selon la revendication 8, **caractérisé en ce que** sont prévus au moins deux embrayages (K1, K2, K3), de préférence au moins un embrayage (K3) destiné à des composants fonctionnels susceptibles d'être actionnés de manière plus fréquente et à intervalles courts, comme des composants fonctionnels présentant des vérins hydrauliques (15, 17, 14, 9), et au moins un embrayage (K1, K2) destiné à des composants fonctionnels susceptibles d'être actionnés à intervalles plus longs, comme des entraînements de marche, des groupes de transport de matériau, des groupes de répartition de matériau, des groupes de pilonnage, de compactage et de vibration, des dispositifs chauffants.

10. Finisseur de route selon la revendication 1, **caractérisé en ce qu'**au moins une pompe hydraulique (31) est une pompe à cylindrée variable (57), et **en ce que** le composant fonctionnel associé pouvant être actionné hydrauliquement, comprend un moteur hydraulique, de préférence un moteur hydraulique à cylindrée variable ou au moins un vérin hydraulique.

11. Finisseur de route selon la revendication 1, **caractérisé en ce qu'**un composant fonctionnel pouvant être actionné électriquement, alimenté par le générateur (G), comprend un dispositif chauffant électrique (H) et/ou un moteur électrique.

12. Finisseur de route selon la revendication 1, **caractérisé en ce que** l'embrayage (K1, K2, K3) est de préférence un embrayage à lamelles ou à disques, pouvant être actionné ou commuté par voie hydraulique ou pneumatique ou électrique ou mécanique, et **en ce qu'**une valeur de mesure de température relevée dans l'optique de la situation de charge de l'embrayage, représente la température d'huile de boite dans une boite de transfert de pompe (19) et/ou la température d'huile dans un circuit hydraulique de l'embrayage.

13. Finisseur de route selon l'une au moins des revendications précédentes, **caractérisé en ce que** pour au moins un composant fonctionnel pouvant être actionné hydrauliquement, il est prévu, dans son circuit hydraulique, un circuit de contournement (D) sans pression, pouvant être activé sélectivement, de préférence en fonction de la pression ou pouvant être activé par le dispositif de commande d'embrayage (S).

14. Procédé pour faire fonctionner un finisseur de route (F) comprenant au moins une table de finisseur (B), lors d'une marche de pose d'enrobé et d'une marche de transport, le finisseur de route (F) englobant un groupe d'entraînement primaire (P), qui présente un moteur à combustion interne (M), ainsi qu'une transmission de puissance comprenant au moins un embrayage (K1, K2, K3) pouvant être embrayé et débrayé sélectivement, vers au moins une pompe hydraulique (30 à 33, 23) et un générateur (G), qui, en fonctionnement, lorsque l'embrayage est embrayé, alimente, ou respectivement alimentent, en puissance des composants fonctionnels pouvant être actionnés par voie hydraulique ou électrique et nécessaires à la marche de pose d'enrobé et/ou à la marche de transport, **caractérisé en ce que** pour ledit au moins un embrayage (K1, K2, K3), on règle au moyen d'un dispositif de commande d'embrayage (S), un retard de débrayage (Δt) prenant le pas sur une conduite d'opérateur, et/ou une limitation du nombre de commutations d'embrayage en fonction d'au moins un ordre de pilotage (43, 44) en présence, pour embrayer ou débrayer l'embrayage (K1, K2, K3) et/ou d'une situation de charge d'embrayage ayant été déterminée, et **en ce que** le dispositif de commande d'embrayage (S) ne débraye automatiquement l'embrayage (K1, K2, K3) qu'après que le retard de débrayage (Δt) se soit écoulé, en l'absence d'un ordre de pilotage (43) contraire, et/ou maintient automatiquement l'embrayage en position embrayée pendant un intervalle de relevé (dt) glissant dans le temps pour la limitation du nombre de commutations d'embrayage, malgré la présence d'un ordre de pilotage (44) contraire pour le débrayage.

15. Procédé selon la revendication 14, **caractérisé en ce que** le dispositif de commande d'embrayage (S) maintient l'embrayage en position embrayée jusqu'à ce qu'au moins un signal mémorisé d'une phase d'embrayage effective (43'), soit sorti de l'intervalle de relevé (dt).
